Europäisches Patentamt

European Patent Office

Office européen des brevets

(11) Veröffentlichungsnummer: **0 512 505 A2**

# EUROPÄISCHE PATENTANMELDUNG

(21) Anmeldenummer: **92107639.4**

(22) Anmeldetag: **06.05.92**

(51) Int. Cl.5: **H04B 10/16**

(30) Priorität: **08.05.91 DE 9105748 U**

(43) Veröffentlichungstag der Anmeldung:
**11.11.92 Patentblatt 92/46**

(84) Benannte Vertragsstaaten:
**AT BE CH DE DK ES FR GB GR IT LI LU MC NL PT SE**

(71) Anmelder: **EKS ELEKTRONIK GÜNTER ENGEL**
**Schützenstrasse 2**
**W-5963 Wenden-Hillmicke(DE)**

(72) Erfinder: **Flick, Uwe**
**Herreshagener Strasse 11**
**W-5270 Gummersbach(DE)**

(74) Vertreter: **Grosse, Dietrich, Dipl.-Ing.**
**Patentanwälte**
**HEMMERICH-MÜLLER-GROSSE-POLLMEIER--**
**VALENTIN-GHISKE Hammerstrasse 2**
**W-5900 Siegen 1(DE)**

(54) **Koppelglied zum Verbinden von datenübertragenden Leitungen.**

(57) Die Erfindung betrifft ein Koppelglied zum Verbinden von datenübertragenden Leitungen, insbesondere von Zweidraht-Busleitern und/oder Lichtwellen-Bussen. Derartige Koppelglieder sollen durch entsprechende Anschlüsse universell sowohl für Busleitungen als auch Lichtleiter anwendbar sein und auch eine Regenerierung der übertragenen Signale zulassen. Dazu wird vorgeschlagen, daß ein Gehäuse 2 mit mindestens drei Anschlüssen 3, 4, 7, 8 für die zu verbindenden Leitungen 5, 6, 9, 10 versehen ist, und daß die Anschlüsse über Verstärker miteinander verbunden sind.

Fig.1

EP 0 512 505 A2

Die Erfindung betrifft ein Koppelglied zum Verbinden von datenübertragenden Leitungen, insbesondere von Zweidraht-Busleitern und/oder Lichtwellen-Bussen.

Bei der Verbindung von datenverarbeitenden Anlagen über Busleitungen zeigt es sich, daß beim Anschließen zu vieler Schaltgruppen und/oder bei der Verwendung zu langer Leitungen einerseits Informationssignale entarten und andererseits Störsignale einstreuen. Es macht sich oft auch unvorteilhaft bemerkbar, daß derartige Datennetze im allgemeinen über ihren gesamten Umfang in der gleichen Technik ausgeführt sind, bspw. als RS 485 Zweidraht-Busleitungen. Die Erfindung geht daher von der Aufgabe aus, einfache und preisgünstige Koppelglieder zu schaffen, welche durch entsprechende Anschlüsse universell sowohl für Busleitungen als auch Lichtleiter anwendbar sind und auch eine Regenerierung der übertragenen Signale zulassen.

Gelöst wird diese Aufgabe durch ein gattungsgemäßes Koppelglied, das ein Gehäuse mit mindestens drei Anschlüssen für zu verbindende Leitungen versehen ist, und in dem die Anschlüsse über Verstärker miteinander verbunden sind. Hierdurch wird einerseits erreicht, daß eine eingehende Leitung verzweigt weitergeführt werden kann, wobei durchaus die Möglichkeit besteht, daß parallel wirksame Anschlüsse zu unterschiedlichen Übertragungsmitteln führen, und durch die Ausstattung mit Verstärkern wird ein aktives Koppelglied erreicht, das in der Lage ist, eingehende Signale zu verstärken bzw. zu regenerieren, so daß auch bei ausgedehnten Anlagen und/oder durch eine Vielzahl von Teilnehmern belasteten Anlagen die übertragenen Signale nur geringfügig in ihrer Intensität abfallen bzw. verschleißen. So lassen sich bereits mit einfachen Kunststoff-Lichtleitern Entfernungen bis zu 100 m sicher überbrücken, und bei der Verwendung von Glasfaser-Lichtleitern lassen sich wesentlich ausgedehntere Netze aufbauen. Auch die Montage gestaltet sich einfach, insbesondere wenn das Gehäuse mit einem auf Tragschienen aufschnappbaren Sockel ausgestattet ist, und bei der üblichen Ausstattung kann das Übertragungsmedium, Draht oder Lichtleiter, frei gewählt werden, um für die jeweiligen Einsatzgebiete eine optimal störungsfreie Datenübertragung zu gewährleisten.

Zweckmäßige und vorteilhafte Weiterbildungen sind in den Unteransprüchen gekennzeichnet.

Im einzelnen sind die Merkmale der Erfindung anhand der folgenden Beschreibung eines Ausführungsbeispieles in Verbindung mit dieses darstellenden Zeichnungen erläutert. Es zeigen hierbei:

Figur 1    schematisch einen Ausschnitt einer datenübertragenden Anlage mit zwei verbindenden Koppelgliedern, und

Figur 2    ein Blockschaltbild des neuerungsgemäßen Koppelgliedes.

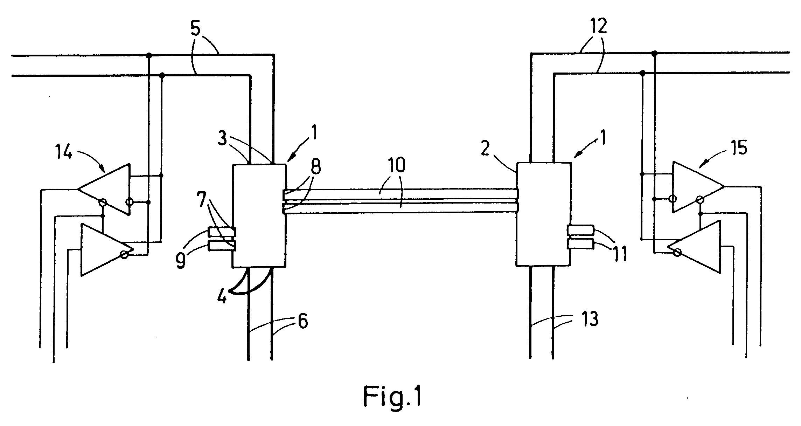

In Fig. 1 sind zwei Koppelglieder 1 gezeigt, die jeweils in einem Gehäuse 2 angeordnet sind. Die Anschlüsse 3 und 4 des ersten Koppelgliedes sind mit zwei Draht-Bussen 5 und 6 verbunden, während in die optischen Anschlüsse 7 und 8 ebenfalls paarig vorgesehene Lichtleiter 9 und 10 eingeführt sind. Das Lichtleiterpaar 10 führt zu einem zweiten Koppelglied 1, mit dessen entsprechenden Anschlüssen weitere zwei Drahtbusse 12 und 13 verbunden sind, während der zweite der optischen Anschlüsse über ein Lichtleiterpaar 11 weitergeführt ist.

Die zwei Draht-Busse werden jeweils nach einem Halbduplex-Verfahren RS 485 betrieben, während bei den Lichtleiter-Paaren 9, 10 und 1 jeweils ein Lichtleiter der Zuführung von Signalen und der andere der Abführung von Signalen dient. In der Fig. 1 sind die jeweiligen Busse, bis auf das Lichtleiterpaar 10, abgebrochen dargestellt, und sowohl der zweite Draht-Bus 5 als auch der Zweidraht-Bus 12 sind beispielhaft mit je einem Modul 14 bzw. 15 beschaltet, um die Vielseitigkeit des mittels des Koppelgliedes erstellbaren Datennetzes aufzuzeigen.

Zur Vereinfachung der Montage ist das Gehäuse 2 des Koppelgliedes 1 mit einem in der Figur nicht dargestellten Schnappsockel ausgestattet, der ein einfaches Aufklemmen auf handelsüblichen Tragschienen erlaubt.

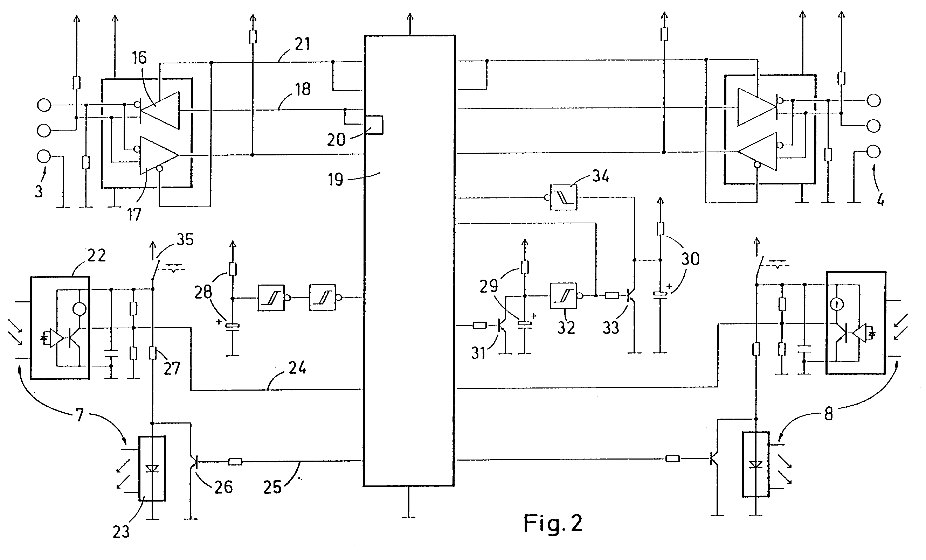

In Fig. 2 ist zur Erläuterung der Arbeitsweise des Koppelgliedes ein Blockschaltbild desselben wiedergegeben.

Die an die Anschlüsse 3 gelegten beiden Adern eines Zweidraht-Busses, bspw. Bus 5 der Fig. 1, sind an separate Klemmen geführt, die jeweils mit inversen Eingängen eines Eingangsverstärkers 16 und inversen Ausgängen eines Ausgangsverstärkers 17 verbunden sind, so daß in jedem der Übermittlungsfälle von Signalen diese über den Zweidraht-Bus komplementär übermittelt werden. Vom Eingangsverstärker 16 führt eine Eingangsleitung 18 zu einem als Steuervorrichtung 19 vorgesehenen Logikbaustein, und mit der Eingangsleitung ist ein in der Steuervorrichtung vorgesehener Sensor 20 verbunden, der auf das Eingehen von zugeführten, empfangenen Signalen anspricht, wenn diese eine vorgegebene Schwellspannung überschreiten, welche der Unterdrückung geringerer Störspannungen dient.

Mit dem Empfangen von Signalen löst der Sensor 20 über ein später erläutertes Mindestschaltzeiten sicherndes Verzögerungsnetz Schaltsignale aus, die über die Schaltleitung 21 den Verstärkern zugeführt werden und den Eingangsverstärker 16 weiterhin aktivieren, während sie den Ausgangsverstärker 17 sperren und damit sichern, daß über die Anschlüsse 3 zugeführte Signale verstärkt weitergeleitet werden. Eine entsprechende, jedoch inverse Spannung wird gleichzeitig den übrigen Empfängern und Sendern zugeleitet, so daß deren Eingangsverstärker gesperrt sowie Ausgangsverstärker wirksam geschaltet werden. Der unterste der Anschlüsse 3 kann als Erdanschluß genutzt werden.

Die Anschlüsse 7 und 8 dienen dem Einführen von Lichtleitern. Der Empfänger 22 enthält im Ausführungsbeispiel eine Fotodiode mit nachgeordneten OP-Verstärker, dessen Ausgang auf einen Transistor geschaltet ist, der seinerseits über eine Eingangsleitung 24 mit der Steuervorrichtung 19 verbunden ist. Der Sender 23 erhält seine Signalspannung über eine Ausgangsleitung 25, welche die Leuchtdiode des Senders 23 über eine Transistor 26 steuert. Um einerseits Stromschwankungen zu verringern und andererseits Überlastungen der Leuchtdiode zu vermeiden, ist dieser ein Widerstand 27 vorgeordnet, der bei offenem Transistor 26 die Leuchtdiode mit leicht reduziertem Strom speist, der durch Leitendwerden des Transistors 26 abgeleitet wird. Um unkontrollierte Lichtverhältnisse und, im Empfänger 22, Signalverhältnisse bei nicht beschalteten Anschlüssen 7 zu unterbinden, werden sowohl der Empfänger 22 als auch der Sender 24 über eine manuell zu bedienenden Ausschalter 28 gespeist.

Jeder Gruppe der Anschlüsse 3, 4, 7, 8 ist ein Sensor zugeordnet, der im Falle des Einganges von Signalen den Eingangsverstärker, bspw. Eingangsverstärker 16, öffnet und den Ausgangsverstärker, bspw. 17 oder 26, sperrt, jedoch die Eingangsverstärker der übrigen Anschlüsse sperrt und deren Ausgangsverstärker mit dem Sensor zum Ansprechen gebracht habenden Eingangsverstärker verbindet. Damit werden jeweils die zuerst mit Signalen beaufschlagten Anschlüsse als Empfänger benutzt, während über die übrigen Anschlüsse die empfangenen Signale verstärkt weitergegeben werden.

Um beim Einschalten des Gerätes definierte Verhältnisse vorliegen zu haben, wird die Wirksamkeit der Schaltung erst dann herbeigeführt, wenn bei allen Teilen der Schaltung jeweils die volle Betriebsspannung anliegt. Erreicht wird dieses mit einer Verzögerung an einem R-C-Glied, das einen folgenden Schmitt-Trigger umschaltet, wenn die Ladung des Kondensators des RC-Gliedes einen vorgegebenen Wert erreicht. Des weiteren wird dafür gesorgt, daß die Übertragungsrichtungen des Koppelgliedes während einer Übertragungsperdiode ohne Rückschalten beibehalten wird. Es hat sich hierbei als zweckmäßig gezeigt, nicht nur sich an der jeweiligen Bit-Länge zu orientieren, sondern zusätzlich auch noch an der Länge eines Byte in Verbindung mit einer zusätzlichen Karenzzeit. In der Schaltung sind RC-Glieder 29 und 30 zum Erzielen der entsprechenden Verzögerungen vorgesehen. Beim Eintreffen eines Signales entlädt der Transistor 31 das RC-Glied 29, und erst mit ausreichender Wiederaufladung gegebener Verzögerung wird der Schmitt-Trigger 32 betätigt, der seinerseits beim Rückschalten über den Transistor 33 das RC-Glied 30 entlädt, das erst bei entsprechendem Wiederaufladen den Schmitt-Trigger 33 beaufschlagt und damit die durch den angesprochenen der Sensoren eingestellte Wirkrichtung des Koppelgliedes aufhebt und damit die Übertragungsperiode beendet.

Die Steuervorrichtung 19 enthält logische Glieder und steuert aufgrund der übermittelten Signale die Wirkrichtungen des Koppelgliedes.

Die geschilderten Maßnahmen ergeben ein nur geringe räumliche Abmessungen aufweisendes Koppelglied für datenübertragende Leitungen, das leicht montierbar ist, einen nur geringen Leistungsbedarf aufweist und in der Lage ist, auf jeweils von einem der Netzteile abgegebene Signale anzusprechen und diese den übrigen Netzteilen verstärkt und damit in ihrer Amplitude regeneriert zu übermitteln, wobei gleichzeitig geringere Störungen ausgeblendet werden. Die Möglichkeit des Anschlusses sowohl elektrischer als auch optischer Leiter in Verbindung mit dem Abzweigen erleichtert den Aufbau sowohl komplizierter als auch große Distanzen überbrückender, datenübertragender Leitungsnetze, und die Möglichkeiten des Anschlusses elektrischer und optischer Leiter erlaubt es, für bestimmte Streckenabschnitte jeweils die für diesen Abschnitt optimale Leitungsart einzusetzen.

## Patentansprüche

1. Koppelglied zum Verbinden von datenübertragenden Leitungen, insbesondere von Zweidraht-Busleitern und/oder Lichtwellenbussen,
   **dadurch gekennzeichnet,**
   daß ein Gehäuse (2) mit mindestens drei Anschlüssen (3, 4, 7, 8) für die zu verbindenden Leitungen (5, 6, 9, 10) versehen ist, und daß die Anschlüsse über Verstärker (16, 17, 22, 26) miteinander verbunden sind.

2. Koppelglied nach Anspruch 1,
   **dadurch gekennzeichnet,**
   daß das Gehäuse (2) einen auf Trageschienen, vorzugsweise DIN EN-Tragschienen, aufschnappbaren Sockel aufweist.

3. Koppelglied nach Anspruch 1 oder 2,
   **dadurch gekennzeichnet,**
   daß die Zweidraht-Busleitungen im Halbduplex-Verfahren betrieben werden und die beiden Leitungswege an inverse Eingänge eines Eingangsverstärkers (16) und inverse Ausgänge eines Ausgangsverstärkers (17) angeschlossen sind, und daß den Eingang von Signalen überwachende Sensoren (20) beim Aufnehmen von eingehenden Signalen den Ausgangsverstärker (17) des eigenen Anschlusses sowie die Eingangsverstärker der übrigen Anschlüsse abschalten.

4. Koppelglied nach einem der Ansprüche 1 bis 3,
   **dadurch gekennzeichnet,**
   daß Lichtleiter (9, 10, 11) paarweise vorgesehen sind, daß einer der Lichtleiter auf einen lichtempfindlichen Halbleiter eines Empfängers (22) und der andere auf eine Leuchtdiode eines Senders (23) geführt sind, und daß das Auftreffen von Licht auf den lichtempfindlichen Halbleiter durch einen Sensor überwacht wird, der beim Ansprechen die Leuchtdiode abschaltet und die Ausgangsverstärker der übrigen Anschlüsse wirksam macht.

5. Koppelglied nach einem der Ansprüche 1 bis 4,
   **gekennzeichnet durch**
   eine Einschaltverzögerung, welche die Anschlüsse (3, 4, 7, 8) erst nach Ansteigen der Versorgungs- auf die Betriebsspannung freigibt.

6. Koppelglied nach einem der Ansprüche 1 bis 5,
   **dadurch gekennzeichnet,**
   daß Verstärker (16, 17, 23, 26) erst beim Überschreiten eines festgelegten Grundwertes der steuernden Signale weitergeben.

7. Koppelglied nach einem der Ansprüche 1 bis 6,
   **dadurch gekennzeichnet,**
   daß die Schaltspannung der Sensoren (20) mit jedem übernommenen Signal aufrechterhalten wird und verzögert abfällt.

8. Koppelglied nach Anspruch 7,
   **gekennzeichnet durch**
   eine mindestens zwei Bits entsprechende Verzögerung.

9. Koppelglied nach Anspruch 6 oder 7,
   **gekennzeichnet durch**
   eine mindestens einem Byte entsprechende Verzögerung.

10. Koppelglied nach einem der Ansprüche 1 bis 9,
    **dadurch gekennzeichnet,**

daß zur Steuerung der Gerätefunktionen eine einen programmierbaren Logikbaustein aufweisende Steuervorrichtung (19) vorgesehen ist.

11. Koppelglied nach einem der Ansprüche 1 bis 10,
    **dadurch gekennzeichnet,**
    daß mindestens zwei für zwei Draht-Busse (5, 6) vorgesehene Anschlüsse (3, 4) sowie mindestens zwei für Lichtleiter (9, 10) vorgesehene Anschlüsse (7, 8) vorgesehen sind.

12. Koppelglied nach einem der Ansprüche 1 bis 11,
    **dadurch gekennzeichnet,**
    daß optische Anschlüsse (7, 8) für den Fall der Nichtbelegung mittels eines Schalters (35) abschaltbar sind.

Fig.1

Fig.2